(19) Europäisches Patentamt
European Patent Office
Office européen des brevets

(11) EP 2 193 614 B1

(12) **EUROPEAN PATENT SPECIFICATION**

(45) Date of publication and mention of the grant of the patent:
**23.10.2019 Bulletin 2019/43**

(21) Application number: **08831766.4**

(22) Date of filing: **22.09.2008**

(51) Int Cl.:
***H04B 7/26*** *(2006.01)*

(86) International application number:
**PCT/US2008/077164**

(87) International publication number:
**WO 2009/039470 (26.03.2009 Gazette 2009/13)**

(54) **SECONDARY SYNCHRONIZATION SIGNAL MAPPING**

SEKUNDÄRE SYNCHRONISATIONSSIGNALABBILDUNG

MISE EN CORRESPONDANCE DU SIGNAL DE SYNCHRONISATION SECONDAIRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority:
**21.09.2007 US 974342 P**
**25.09.2007 US 975062 P**
**26.09.2007 US 975393 P**
**08.10.2007 US 978188 P**
**19.09.2008 US 234362**

(43) Date of publication of application:
**09.06.2010 Bulletin 2010/23**

(60) Divisional application:
**18154646.6 / 3 337 060**

(73) Proprietor: **Intel Corporation**
**Santa Clara, CA 95054 (US)**

(72) Inventors:
- **ONGGOSANUSI, Eko, N.**
  **Allen, TX 75013 (US)**
- **DABAK, Anand, G.**
  **Plano, TX 75025 (US)**

(74) Representative: **HGF Limited et al**
**Fountain Precinct**
**Balm Green**
**Sheffield S1 2JA (GB)**

(56) References cited:
**JP-A- 11 275 002**
**KR-A- 20070 050 356**
**US-A1- 2002 064 211**
**US-A1- 2002 146 041**
**US-A1- 2004 246 998**
**US-B1- 7 095 811**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This is directed, in general, to a communication system and, more specifically, to a transmitter, a receiver and methods of operating a transmitter or a receiver.

### BACKGROUND

In a cellular network, such as one employing orthogonal frequency division multiple access (OFDMA), each cell employs a base station that communicates with user equipment, such as a cell phone, a laptop, or a PDA, that is actively located within its cell. When the user equipment is first turned on, it has to do an initial cell search in order to be connected to the cellular network. This involves a downlink synchronization process between the base station and the user equipment wherein the base station sends a synchronization signal to the user equipment.

During initial cell search, the user equipment establishes timing and frequency offset parameters. Timing involves knowing where to sample the start of the synchronization frame and associated symbols. Frequency offset involves determining the mismatch between the controlling oscillator at the base station and the local oscillator in the user equipment. As the moving user equipment approaches a cell boundary between two adjoining cells, it performs a neighboring cell search in preparation to handover its activation from the initial cell to the neighboring cell. During this time, it receives information from the two base stations. Improvements in the process of transitioning between adjoining cells would prove beneficial in the art. US 2004/0246998 discloses physical layer structures and initial access schemes in an unsynchronized communication network.

### SUMMARY

Embodiments provide a transmitter, a receiver and methods of operating a transmitter or a receiver. In one embodiment, the transmitter is for use with a base station and includes a primary module configured to provide a primary synchronization signal. The transmitter also includes a secondary mapping module configured to provide a secondary synchronization signal derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences that defines a cell identity group. Additionally, the transmitter further includes a transmit module configured to transmit the primary and secondary synchronization signals.

In another embodiment, the receiver is for use with user equipment and includes a receive module configured to receive primary and secondary synchronization signals. The receiver also includes a primary processing module configured to detect a partial cell identity from the primary synchronization signal. Additionally, the receiver further includes a secondary processing module configured to detect a cell identity group from the secondary synchronization signal that is derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences.

In another aspect, the method of operating the transmitter is for use with a base station and includes providing a primary synchronization signal. The method also includes providing a secondary synchronization signal derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences that defines a cell identity group. The method further includes transmitting the primary and secondary synchronization signals.

In yet another aspect, the method of operating the receiver is for use with user equipment and includes receiving primary and secondary synchronization signals. The method also includes detecting a partial cell identity from the primary synchronization signal. The method further includes defining a cell identity group from the secondary synchronization signal that is derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences.

### BRIEF DESCRIPTION OF THE DRAWINGS

Example embodiments are described below with reference to accompanying drawings, wherein:

FIG. 1 illustrates an example diagram of a cellular network employing embodiments a transmitter and a receiver constructed according to the principles of the present disclosure;

FIG. 2A illustrates a diagram of a downlink radio frame that includes a downlink synchronization signal constructed according to the principles of the present disclosure;

FIG. 2B illustrates an embodiment of a primary synchronization signal constructed according to the principles of the present disclosure;

FIG. 2C illustrates an embodiment of a scrambled secondary synchronization signal mapping based on employing two segments and constructed according to the principles of the present disclosure;

FIG. 2D illustrates a diagram of an embodiment of secondary synchronization sequence scrambling constructed according to the principles of the present disclosure;

FIG. 3 illustrates a diagram corresponding to an embodiment of a neighboring cell search as may be employed by user equipment such as the user equipment discussed with respect to FIG. 1;

FIG. 4 illustrates an embodiment of a segment plane constructed according to the principles of the present disclosure;

FIGS. 5A, 5B, 5C and 5D illustrate embodiments of mapping schemes for first and second segments of the S-SCH constructed according to the principles of the present disclosure;

FIG. 6 illustrates a flow diagram of an embodiment of a method of operating a transmitter carried out in accordance with the principles of the present disclosure; and

FIG. 7 illustrates a flow diagram of an embodiment of a method of operating a receiver carried out in accordance with the principles of the present disclosure.

DETAILED DESCRIPTION OF EXAMPLE EMBODIMENTS

FIG. 1 illustrates an example of a cellular network 100 employing embodiments a transmitter and a receiver constructed according to the principles of the present disclosure. In the illustrated embodiment, the cellular network 100 is part of an OFDMA system and includes a cellular grid having a centric cell and six surrounding first-tier cells. The centric cell employs a centric base station BS1, and the surrounding first-tier cells employ first-tier base stations BS2-BS7, as shown.

The centric base station BS1 includes a first base station transmitter 105 and the first tier base station BS2 includes a second base station transmitter 115. User equipment (UE) is located on a cell boundary between the first and second base station transmitters 105, 115, as shown. The first base station transmitter 105 includes a primary module 106, a secondary mapping module 107 and a transmit module 108. The second base station transmitter 115 includes a primary module 116, a secondary mapping module 117 and a transmit module 118. The UE includes a UE receiver 125 having a receive module 126, a primary processing module 127 and a secondary processing module 128.

In the first and second base station transmitters 105, 115, the primary modules 106, 116 are configured to provide a primary synchronization signal. The secondary mapping modules 107, 117 are configured to provide a secondary synchronization signal derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences that defines a cell identity group. The transmit modules 108, 118 are configured to transmit the primary and secondary synchronization signals.

In the UE receiver 125, the receive module 126 is configured receive primary and secondary synchronization signals. The primary processing module 127 is configured to detect a partial cell identity from the primary synchronization signal. The secondary processing module 128 is configured to detect a cell identity group from the secondary synchronization signal that is derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences.

FIG. 2A illustrates a diagram of a downlink radio frame 200 that includes a downlink synchronization signal constructed according to the principles of the present disclosure. The downlink radio frame 200 includes two synchronization signals wherein each consists of a primary synchronization signal (PSS, also termed P-SCH) 205 and a secondary synchronization signal (SSS, also termed S-SCH) 210 that are located as shown. One PSS 205 and one SSS 210 symbol are transmitted every 5ms epoch. Design of the synchronization signals to enable fast cell search (i.e., less than 100 ms) is required for long-term evolution (LTE) of 3GPP.

The underlying code for the PSS 205 is called a primary SYNC code (PSC). The PSC for each cell is chosen from three sequences and is tied to the cell identification (ID) within a certain group of cell IDs. Hence, one PSS symbol carries three cell ID hypotheses. The underlying code for the SSS 210 is called the secondary SYNC code (SSC). The SSS 210 carries cell-specific information. The following cell-specific information may be carried in one SSS symbol.

As an example, a total of 510 cell IDs are to be supported. Since three cell ID hypotheses are carried in the PSS 205, 170 cell ID groups (170 hypotheses) are provided. Additionally, since there are two SSS 210 symbols per radio frame 200, a radio framing timing indicator (FT0 or FT1) is also provided. In the illustrated embodiments of the present disclosure, two-segment SSC designs may be employed. That is, two groups of M-sequences with half-length (31) are used to construct a large number of composite sequences. Additionally, the two sequences are interleaved.

The two-segment SSC design inherits problems of ambiguity and collision in relation to a neighboring cell search. For the case of ambiguity, multiple M -sequences are detected for each of the two SSC segments during the neighboring cell search. For example, if two M - sequences are detected for each segment, there are a total of four possibilities where some may not be valid. Hence, ambiguity occurs when both the SSC segments corresponding to the two adjacent cells differ. In general, if $n_1$ and $n_2$ $M$ -sequences are detected for segments one and two, there are a total of $n_1 \times n_2$ possibilities (although there are only $\max(n_1,n_2)$ distinct cell IDs). For the case of collision, one (and only one) of the SSC segments is identical for several SSC sequences. Essentially, this amounts to higher pair-wise cross-correlation across the SSC sequences.

FIG. 2B illustrates an embodiment of a primary synchronization signal 220 constructed according to the principles of the present disclosure. FIG. 2B shows a mapping in the frequency domain of a PSS corresponding to the primary synchronization signal (PSS) 220 that occupies a center 63 sub-carriers, as shown. The mapping also includes a DC sub-carrier and the data sub-carriers. This mapping assumes that there are 31 sub-carriers to both the left and right of the DC sub-carrier.

Since coherent SSS detection offers better performance than non-coherent detection in most scenarios, the PSS and SSS designs accommodate accurate coherent SSS detection. Additionally, since the PSS is used as a phase reference (to provide channel estimates) for decoding the SSS (demodulating the SSS), the SSS occupies exactly the same set of sub-carriers as the PSS in the illustrated embodiment.

FIG. 2C illustrates an embodiment of a scrambled secondary synchronization signal (SSS) mapping 230 based on employing two segments and constructed according to the principles of the present disclosure. The SSS mapping 230 occupies the center 63 sub-carriers as discussed with respect to FIG. 2B. The mapping includes the DC sub-carrier 301 and data sub-carriers, as before. Here, the mapping shows an interleaving of sub-carriers representing even and odd scrambled sequences of a two-segment, interleaved SSS.

In this case, the underlying SSS is of length-31 (two length-31 sequences interleaved in the frequency domain). Several natural candidates are $M$ -sequences (pseudo noise ($PN$) sequences), Gold sequences, and truncated Walsh sequences. With Walsh sequences, the underlying length is 32, with one sample truncated. Other designs are also possible.

FIG. 2D illustrates a diagram 240 of a construction of the secondary synchronization signal. The diagram 240 includes first and second SSS segments as may be employed in subframes 0 and 5 of FIG. 2A above (indicated by m1 and m2, respectively). In subframe 0 (which corresponds to frame timing hypothesis 0), the first SSS segment is provided as an even sequence, and in subframe 5 (which corresponds to frame timing hypothesis 1), it is provided as an odd sequence, as shown. Correspondingly, in subframe 5, the second SSS segment is provided as an even sequence, and in subframe 0, it is provided as an odd sequence, as shown. This action causes the swapping of the two SSS sequences in subframes 0 and 5. Each of the even and odd sequences is initially scrambled where the scrambling may be the same or different for subframe 0 and 5. The resulting even and odd scrambled sequences are interleaved as shown in FIG. 2C.

FIG. 3 illustrates an embodiment of a neighboring cell search 300 as may be employed by user equipment such as the user equipment discussed with respect to FIG. 1. The diagram of the neighboring cell search 300 includes user equipment 305 and first and second synchronization signals 310, 315.

The ambiguity problem is clearly more detrimental since a wrong cell ID is detected 33 percent of the time. To illustrate the problems more clearly, different combinations of *PSC, SSC*1 (segment 1), and SSC2 (segment 2) are first identified. Assume a neighboring cell search scenario in a synchronous network with two cell IDs associated with (*PSC, SSC*1, *SSC*2) equal to (*Pa, S*1*a, S*2*a*) and (*Pb, S*1*b*, *S*2*b*). There are eight possible scenarios, as may be seen in Table 1 below.

Table 1: Eight Scenarios for the PSC, SS1 and SSC2 Triplet

| Scenario | *Pa* & *Pb* | *S*1*a* & *S*1*b* | *S*2*a* & *S*2*b* | Problem |
|---|---|---|---|---|
| 1 | Same | Same | Same | n/a |
| 2 | Same | Same | Different | Collision |
| 3 | Same | Different | Same | Collision |
| 4 | Same | Different | Different | Ambiguity |
| 5 | Different | Same | Same | - |
| 6 | Different | Same | Different | Collision |
| 7 | Different | Different | Same | Collision |
| 8 | Different | Different | Different | Ambiguity |

By further analyzing Table 1 above and employing appropriate definitions, the following conclusions may be formed.

When a collision occurs (when only one segment is the same), ambiguity does not occur since ambiguity requires the two segments to be different. The converse also holds. Hence, collision and ambiguity are two disjoint problems).

Phase mismatch occurs whenever the channel seen by the PSC is significantly different from that seen by at least one segment of the SSC. Here, phase mismatch is defined in the context of the two cells IDs in the neighboring cells.

Other than the increase in phase mismatch, collision in the SSC design results in a lower minimum distance for the overall SSC.

To avoid a particular ambiguity, the other two cross combinations are not valid. This is, if the two SSCs are $\{X1, X2\}$ and $(Y1,Y2)$ with $X1 \neq Y1$ and $X2 \neq Y2$, the cross combinations $(X1,Y2)$ and $(X2,Y1)$ are not allowed to be valid SSCs codes. To fully avoid ambiguity and collision, there must be a one-to-one correspondence between segment one and segment two of the SSC.

Scenario 1 can happen due to a poor or incidental cell ID assignment for which there is nothing to be done. Scenarios 2, 3, and 4 are typically second-tier interference at best assuming a reasonable cell ID assignment. Scenarios 5, 6, 7, and 8 correspond to first-tier interference and hence are the most relevant scenarios.

FIG. 4 illustrates an embodiment of a segment plane 400 constructed according to the principles of the present disclosure. The illustrated segment plane 400 includes lower and upper triangular regions 405, 410 corresponding to first and second radio framing timing indicators FT0, FT1. While the region for $(S_1,S_2)$ is illustrated as a plane, the valid points only include the combinations where $S_1$ and $S_2$ are integer between 0 and N-1.

Embodiments of this disclosure provide mapping strategies that minimize both collision and ambiguity events. Assuming a total of N available M-sequences per segment, the *x* - axis and y -axis represent a sequence index $S_1$ and $S_2$ for segments 1 and 2, respectively. The upper triangular region 410 is defined as follows: $\{(S_1,S_2){:}S_2 \geq S_1,S_i \in \{0,1,...,N-1\}\}$.

The following observations and design principles may be inferred from FIG. 4.

Ambiguity events can be reduced significantly when a rectangle mapping region is avoided for a given radio frame timing hypothesis, since a rectangular mapping ensures the worst ambiguity condition. For example, if the two SSC mappings are $\{X1, X2\}$ and $(Y1,Y2)$ with $X1 \neq Y1$ and $X2 \neq Y2$, both of the two cross combinations $(X1,Y2)$ and $(X2,Y1)$ are a valid SSC mapping.

The number of collision and ambiguity events can be minimized when all the possible $(S1,S2)$ pairs occupy a region parallel to the diagonal line of $S1 = S2$ with minimum region width for a given radio frame timing. This ensures that minimum cross-over with the horizontal and vertical lines. The principle is analogous to minimizing the time-bandwidth product of the chirp waveform in the time-frequency plane. A mapping region as close as possible to the diagonal line of $S1 = S2$ ensures a minimum region width. This occurs because the area of the mapping region is maximized.

With swapped mapping, the mapping only occupies the upper or lower triangular region of the segment plane 400 for a given radio frame timing hypothesis

The design principles in 1, 2, or 3 above can be combined with other mapping strategies such as the simple or swapped mapping. With swapped mapping, both the lower and upper triangular regions 405, 410 are utilized. That is, the mapping set is partitioned into two parts which are mirror image with respect to the $S1 = S2$ line. In fact, the combination of swapped mapping (principle 3) with the diagonal mapping (principle 2) ensures the minimum region width for a given radio frame timing.

FIGS. 5A, 5B, 5C and 5D illustrate embodiments of mapping schemes for first and second segments of the SSS constructed according to the principles of the present disclosure. The examples discussed with respect to FIGS. 5A, 5B, 5C and 5D employ the general structure of FIG. 4.

Two radio frame timing hypotheses (FT0 and FT1) and 170 cell group IDs are assumed. This yields a total of 340 hypotheses. Note that these numbers are used only for illustrative purposes. For example, the current disclosure also includes a scenario having a different number of cell identity groups (e.g., 168 cell identity groups). Additionally, $N = 31$ is also assumed.

FIG. 5A depicts a proposed mapping scheme in combination with swapped mapping strategies. In this case, $i1$, $i2$, $j1$, $j2$ should be chosen such that $(i2 - i1 + 1) \times (j2 - j1 + 1) \geq 170$. Then, a subset of the size-170 can be chosen for each of the two rectangular regions. Each of the two rectangular regions represents one of the two frame timing hypotheses FT0, FT1. The two regions are mirror images of each other with respect to the $S1 = S2$ diagonal line. This mapping scheme, however, results in a poor number of ambiguity events. It may be noted that instead of occupying a rectangular region, any arbitrary shape (e.g., triangular or even circular) can also be used. The rectangular region is only for illustrative purposes.

FIG. 5B depicts a mapping scheme with a triangular mapping region. In this case, $i1$, $i2$, $j1$, $j2$ may be chosen such that $\frac{(i2-i1+1)\times(j2-j1+1)}{2} \geq 170$. It may be noted that the embodiments in FIGS. 5A and 5B do not necessarily follow the second design principle, which will be reflected in FIGS. 5C and 5D below. Note also that *i*1, *i*2, *j*1, *j*2 can take any value from 0,1,...,30.

FIGS. 5C and 5D depict two embodiments that adhere to the second design principle, which minimizes the number of collision and ambiguity events. FIG. 5C employs swapped mapping, which is unlike FIG. 5D. For FIG. 5C, *i*1,*i*2, *j*1, *j*2 is chosen such that $(31-i2-i1)\times(i2-i1)+\frac{(i2-i1)\times(i2-i1+1)}{2}\geq 170$. Then, a subset of size-170 can be chosen for each of the two strip regions. In this case, a swapped mapping relationship between two SSC hypotheses with the same cell ID group holds. For frame timing FT0, (*X*1, *X*2) represents the same cell ID group as (*X*2, *X*1) for frame timing FT1.

For the example of FIG. 5C, *i*1,*i*2, *j*1, *j*2 is chosen such that $(31-i2-i1)\times(i2-i1)+\frac{(i2-i1)\times(i2-i1+1)}{2}\geq 340$. Then, a subset of size-240 can be chosen for each of the two strip regions. In the example of FIG. 5d, a particular relation for frame timing FT0 and FT1 corresponding to the same cell ID group is not established. While FIG. 5D depicts only a lower triangular mapping region, the same principles may be applied for only an upper triangular mapping region.

Note that *i*1, *i*2, *j*1, *j*2 (*j*1 and *j*2 are directly related by *i*2 and *i*1, respectively) can take any value from 0,1,...,30 although *i*1 = 0 is not preferred for FIG. 5C due to the overlap in the mapping for the two different frame timing instances. To minimize the width of the mapping region (principle 2), *i*1 = 1 is the best choice for both examples of FIGS. 5C and 5D. Intuitively, the example of FIG. 5C results in a reduced number of collision and ambiguity events compared to the other examples of FIGS. 5A, 5B and 5D.

A final choice of mapping may consider the SSC distance property after SSC-based scrambling is applied (scrambling of segment 2 as a function of segment 1). Note that when an *M* -sequence based SSC is used (all the SSCs are derived from one generator polynomial), the set of scrambling codes for segment 2 is taken from the same set of codes as segment 1. This is because the resulting set of segment 2 sequences has the maximum set cardinality of 32. Of course, other variations and combinations of the above design principles are possible.

In the above examples, it is assumed that the number of cell ID groups is 170. An extension (or subset) can be used if a larger (or smaller) number of cell ID groups is desired. For instance, if the number of cell ID groups is 168 (the one used for LTE), a subset can be used.

Below are two swapped diagonal mapping examples (a first example corresponding to Tables 2 and 3 and a second example corresponding to Table 4) along with formulas to generate the code-sequence index for segment 1 and segment 2. The mapping/pairing (*S*1, *S*2) is defined for the one frame timing hypothesis. The pairing for the other frame timing hypothesis is then (*S*2,*S*1). An extension (or subset) can be used if a larger (or smaller) number of cell-ID-groups is desired. For example, if the number of cell ID groups is 168, the last elements (corresponding to GID=168 and 169 can be discarded).

Table 2: Example 1

| *GID* | *S*1 | *S*2 | *GID* | *S*1 | *S*2 | *GID* | *S*1 | *S*2 | *GID* | *S*1 | *S*2 | *GID* | *S*1 | *S*2 |
|---|---|---|---|---|---|---|---|---|---|---|---|---|---|---|
| 0 | 0 | 1 | 34 | 5 | 10 | 68 | 11 | 14 | 102 | 17 | 18 | 136 | 22 | 27 |
| 1 | 0 | 2 | 35 | 5 | 11 | 69 | 11 | 15 | 103 | 17 | 19 | 137 | 22 | 28 |
| 2 | 0 | 3 | 36 | 6 | 7 | 70 | 11 | 16 | 104 | 17 | 20 | 138 | 23 | 24 |
| 3 | 0 | 4 | 37 | 6 | 8 | 71 | 11 | 17 | 105 | 17 | 21 | 139 | 23 | 25 |
| 4 | 0 | 5 | 38 | 6 | 9 | 72 | 12 | 13 | 106 | 17 | 22 | 140 | 23 | 26 |
| 5 | 0 | 6 | 39 | 6 | 10 | 73 | 12 | 14 | 107 | 17 | 23 | 141 | 23 | 27 |
| 6 | 1 | 2 | 40 | 6 | 11 | 74 | 12 | 15 | 108 | 18 | 19 | 142 | 23 | 28 |
| 7 | 1 | 3 | 41 | 6 | 12 | 75 | 12 | 16 | 109 | 18 | 20 | 143 | 23 | 29 |
| 8 | 1 | 4 | 42 | 7 | 8 | 76 | 12 | 17 | 110 | 18 | 21 | 144 | 24 | 25 |
| 9 | 1 | 5 | 43 | 7 | 9 | 77 | 12 | 18 | 111 | 18 | 22 | 145 | 24 | 26 |
| 10 | 1 | 6 | 44 | 7 | 10 | 78 | 13 | 14 | 112 | 18 | 23 | 146 | 24 | 27 |
| 11 | 1 | 7 | 45 | 7 | 11 | 79 | 13 | 15 | 113 | 18 | 24 | 147 | 24 | 28 |
| 12 | 2 | 3 | 46 | 7 | 12 | 80 | 13 | 16 | 114 | 19 | 20 | 148 | 24 | 29 |

(continued)

| *GID* | *S*1 | *S*2 | *GID* | *S*1 | *S*2 | *GID* | *S*1 | *S*2 | *GID* | *S*1 | *S*2 | *GID* | *S*1 | *S*2 |
|---|---|---|---|---|---|---|---|---|---|---|---|---|---|---|
| 13 | 2 | 4 | 47 | 7 | 13 | 81 | 13 | 17 | 115 | 19 | 21 | 149 | 24 | 30 |
| 14 | 2 | 5 | 48 | 8 | 9 | 82 | 13 | 18 | 116 | 19 | 22 | 150 | 25 | 26 |
| 15 | 2 | 6 | 49 | 8 | 10 | 83 | 13 | 19 | 117 | 19 | 23 | 151 | 25 | 27 |
| 16 | 2 | 7 | 50 | 8 | 11 | 84 | 14 | 15 | 118 | 19 | 24 | 152 | 25 | 28 |
| 17 | 2 | 8 | 51 | 8 | 12 | 85 | 14 | 16 | 119 | 19 | 25 | 153 | 25 | 29 |
| 18 | 3 | 4 | 52 | 8 | 13 | 86 | 14 | 17 | 120 | 20 | 21 | 154 | 25 | 30 |
| 19 | 3 | 5 | 53 | 8 | 14 | 87 | 14 | 18 | 121 | 20 | 22 | 155 | 26 | 27 |
| 20 | 3 | 6 | 54 | 9 | 10 | 88 | 14 | 19 | 122 | 20 | 23 | 156 | 26 | 28 |
| 21 | 3 | 7 | 55 | 9 | 11 | 89 | 14 | 20 | 123 | 20 | 24 | 157 | 26 | 29 |
| 22 | 3 | 8 | 56 | 9 | 12 | 90 | 15 | 16 | 124 | 20 | 25 | 158 | 26 | 30 |
| 23 | 3 | 9 | 57 | 9 | 13 | 91 | 15 | 17 | 125 | 20 | 26 | 159 | 27 | 28 |
| 24 | 4 | 5 | 58 | 9 | 14 | 92 | 15 | 18 | 126 | 21 | 22 | 160 | 27 | 29 |
| 25 | 4 | 6 | 59 | 9 | 15 | 93 | 15 | 19 | 127 | 21 | 23 | 161 | 27 | 30 |
| 26 | 4 | 7 | 60 | 10 | 11 | 94 | 15 | 20 | 128 | 21 | 24 | 162 | 28 | 29 |
| 27 | 4 | 8 | 61 | 10 | 12 | 95 | 15 | 21 | 129 | 21 | 25 | 163 | 28 | 30 |
| 28 | 4 | 9 | 62 | 10 | 13 | 96 | 16 | 17 | 130 | 21 | 26 | 164 | 29 | 30 |
| 29 | 4 | 10 | 63 | 10 | 14 | 97 | 16 | 18 | 131 | 21 | 27 | 165 | 0 | 7 |
| 30 | 5 | 6 | 64 | 10 | 15 | 98 | 16 | 19 | 132 | 22 | 23 | 166 | 1 | 8 |
| 31 | 5 | 7 | 65 | 10 | 16 | 99 | 16 | 20 | 133 | 22 | 24 | 167 | 2 | 9 |
| 32 | 5 | 8 | 66 | 11 | 12 | 100 | 16 | 21 | 134 | 22 | 25 | 168 | 3 | 10 |
| 33 | 5 | 9 | 67 | 11 | 13 | 101 | 16 | 22 | 135 | 22 | 26 | 169 | 4 | 11 |
| $n = GID$ | | | | | | | | | | | | | | |

Define

$$\eta = round\left(\sqrt{2\times(165-n)}\right)$$

Then the mapping is defined as:

Table 3: Example 1

| $n$ | $S_1(n)$ | $S_2(n)$ |
|---|---|---|
| 0,1,...,149 | $\frac{n}{6}$ | $S_1(n)$+mod($n$,6)+1 |
| 150,151,...,164 | 30-$\eta$ | $S_1(n)$+mod($n$+1,$\eta$)+1, $\eta = 4$<br>$S_1(n)$+mod($n$,$\eta$)+1, $\eta \neq 4$ |
| 165,166,...,169 | $n$-165 | $S_1(n)$+7 |

Table 4: Example 2

| *GID* | *S*1 | *S*2 | *GID* | *S*1 | *S*2 | *GID* | *S*1 | *S*2 | *GID* | *S*1 | *S*2 | *GID* | *S*1 | *S*2 |
|---|---|---|---|---|---|---|---|---|---|---|---|---|---|---|
| 0 | 0 | 1 | 34 | 4 | 6 | 68 | 9 | 12 | 102 | 15 | 19 | 136 | 22 | 27 |
| 1 | 1 | 2 | 35 | 5 | 7 | 69 | 10 | 13 | 103 | 16 | 20 | 137 | 23 | 28 |
| 2 | 2 | 3 | 36 | 6 | 8 | 70 | 11 | 14 | 104 | 17 | 21 | 138 | 24 | 29 |
| 3 | 3 | 4 | 37 | 7 | 9 | 71 | 12 | 15 | 105 | 18 | 22 | 139 | 25 | 30 |
| 4 | 4 | 5 | 38 | 8 | 10 | 72 | 13 | 16 | 106 | 19 | 23 | 140 | 0 | 6 |
| 5 | 5 | 6 | 39 | 9 | 11 | 73 | 14 | 17 | 107 | 20 | 24 | 141 | 1 | 7 |
| 6 | 6 | 7 | 40 | 10 | 12 | 74 | 15 | 18 | 108 | 21 | 25 | 142 | 2 | 8 |
| 7 | 7 | 8 | 41 | 11 | 13 | 75 | 16 | 19 | 109 | 22 | 26 | 143 | 3 | 9 |
| 8 | 8 | 9 | 42 | 12 | 14 | 76 | 17 | 20 | 110 | 23 | 27 | 144 | 4 | 10 |
| 9 | 9 | 10 | 43 | 13 | 15 | 77 | 18 | 21 | 111 | 24 | 28 | 145 | 5 | 11 |
| 10 | 10 | 11 | 44 | 14 | 16 | 78 | 19 | 22 | 112 | 25 | 29 | 146 | 6 | 12 |
| 11 | 11 | 12 | 45 | 15 | 17 | 79 | 20 | 23 | 113 | 26 | 30 | 147 | 7 | 13 |
| 12 | 12 | 13 | 46 | 16 | 18 | 80 | 21 | 24 | 114 | 0 | 5 | 148 | 8 | 14 |
| 13 | 13 | 14 | 47 | 17 | 19 | 81 | 22 | 25 | 115 | 1 | 6 | 149 | 9 | 15 |
| 14 | 14 | 15 | 48 | 18 | 20 | 82 | 23 | 26 | 116 | 2 | 7 | 150 | 10 | 16 |
| 15 | 15 | 16 | 49 | 19 | 21 | 83 | 24 | 27 | 117 | 3 | 8 | 151 | 11 | 17 |
| 16 | 16 | 17 | 50 | 20 | 22 | 84 | 25 | 28 | 118 | 4 | 9 | 152 | 12 | 18 |
| 17 | 17 | 18 | 51 | 21 | 23 | 85 | 26 | 29 | 119 | 5 | 10 | 153 | 13 | 19 |
| 18 | 18 | 19 | 52 | 22 | 24 | 86 | 27 | 30 | 120 | 6 | 11 | 154 | 14 | 20 |
| 19 | 19 | 20 | 53 | 23 | 25 | 87 | 0 | 4 | 121 | 7 | 12 | 155 | 15 | 21 |
| 20 | 20 | 21 | 54 | 24 | 26 | 88 | 1 | 5 | 122 | 8 | 13 | 156 | 16 | 22 |
| 21 | 21 | 22 | 55 | 25 | 27 | 89 | 2 | 6 | 123 | 9 | 14 | 157 | 17 | 23 |
| 22 | 22 | 23 | 56 | 26 | 28 | 90 | 3 | 7 | 124 | 10 | 15 | 158 | 18 | 24 |
| 23 | 23 | 24 | 57 | 27 | 29 | 91 | 4 | 8 | 125 | 11 | 16 | 159 | 19 | 25 |
| 24 | 24 | 25 | 58 | 28 | 30 | 92 | 5 | 9 | 126 | 12 | 17 | 160 | 20 | 26 |
| 25 | 25 | 26 | 59 | 0 | 3 | 93 | 6 | 10 | 127 | 13 | 18 | 161 | 21 | 27 |
| 26 | 26 | 27 | 60 | 1 | 4 | 94 | 7 | 11 | 128 | 14 | 19 | 162 | 22 | 28 |
| 27 | 27 | 28 | 61 | 2 | 5 | 95 | 8 | 12 | 129 | 15 | 20 | 163 | 23 | 29 |
| 28 | 28 | 29 | 62 | 3 | 6 | 96 | 9 | 13 | 130 | 16 | 21 | 164 | 24 | 30 |
| 29 | 29 | 30 | 63 | 4 | 7 | 97 | 10 | 14 | 131 | 17 | 22 | 165 | 0 | 7 |
| 30 | 0 | 2 | 64 | 5 | 8 | 98 | 11 | 15 | 132 | 18 | 23 | 166 | 1 | 8 |
| 31 | 1 | 3 | 65 | 6 | 9 | 99 | 12 | 16 | 133 | 19 | 24 | 167 | 2 | 9 |
| 32 | 2 | 4 | 66 | 7 | 10 | 100 | 13 | 17 | 134 | 20 | 25 | 168 | 3 | 10 |
| 33 | 3 | 5 | 67 | 8 | 11 | 101 | 14 | 18 | 135 | 21 | 26 | 169 | 4 | 11 |
| *n = GID* | | | | | | | | | | | | | | |

Define

$$\eta = round\left(\sqrt{2\times(465-n)}\right)$$

$$\theta = \frac{(29-\eta)(30-\eta)}{2}$$

Then the mapping is defined as

$$S_1(n) = \mathrm{mod}(n-\theta, \eta+1)$$

$$S_2(n) = \mathrm{mod}\left(S_1(n) + \left\lfloor \frac{n-\theta}{\eta+1} \right\rfloor + 1, 31\right)$$

FIG. 6 illustrates a flow diagram of an embodiment of a method of operating a transmitter 600 carried out in accordance with the principles of the present disclosure. The method 600 is for use with a base station and starts in a step 605. Then, in a step 610, a primary synchronization signal is provided. A secondary synchronization signal is provided that is derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences that defines a cell identity group, in a step 615.

In one embodiment, a first and second frame timing value corresponds to an index pair condition of $S_1 > S_2$ and $S_2 > S_1$, respectively. In another embodiment, a first and second frame timing value corresponds to an index pair condition of $S_2 > S_1$ and $S_1 > S_2$, respectively.

In one embodiment, index pair conditions $S_2 > S_1$ and $S_2 - S_1$ are restricted throughout possible integer values by a selected usage of all N sequences, for a given frame timing value. The indices $S_1$ and $S_2$ represent two different cyclic shifts of the same M-sequence. Additionally, the number of cell identity groups is 168, $N$ is 31, and the index pair condition $S_2 - S_1$ ranges from one to seven. Also, index pair conditions $(S_1, S_2)=(m_1, m_2)$ and $(S_1,S_2)=(m_2,m_1)$ represent a same cell identity group for two different frame timing values. The primary and secondary synchronization signals are transmitted in a step 620, and the method 600 ends in a step 625.

FIG. 7 illustrates a flow diagram of an embodiment of a method of operating a receiver 700 carried out in accordance with the principles of the present disclosure. The method 700 is for use with user equipment and starts in a step 705. Then, in a step 710, primary and secondary synchronization signals are received. A partial cell identity from the primary synchronization signal in a step 715. A cell identity group is defined from the secondary synchronization signal that is derived from two sequences taken from a same set of N sequences and indexed by an index pair ($S_1$, $S_2$) with $S_1$ and $S_2$ ranging from zero to N-1, wherein the index pair ($S_1$, $S_2$) is contained in a mapped set of index pairs corresponding to the same set of N sequences, in a step 720.

In one embodiment, a first and second frame timing value corresponds to an index pair condition of $S_1 > S_2$ and $S_2 > S_1$, respectively. In another embodiment, a first and second frame timing value corresponds to an index pair condition of $S_2 > S_1$ and $S_1 > S_2$, respectively.

In one embodiment, index pair conditions $S_2 > S_1$ and $S_2 - S_1$ are restricted throughout possible integer values by a selected usage of all N sequences, for a given frame timing value. The indices $S_1$ and $S_2$ represent two different cyclic shifts of the same M-sequence. Additionally, the number of cell identity groups is 168, $N$ is 31, and the index pair condition $S_2 - S_1$ ranges from one to seven. Also, index pair conditions $(S_1, S_2)=(m_1, m_2)$ and $(S_1, S_2)=(m_2, m_1)$ represent a same cell identity group for two different frame timing values. The method 700 ends in a step 725.

Embodiments having different combinations of one or more of the features or steps described in the context of example embodiments having all or just some of such features or steps are intended to be covered hereby.

Those skilled in the art will appreciate that many other embodiments and variations are also possible within the scope of the claimed invention.

## Claims

1. A method of operating a transmitter (105, 115) for use with a base station (BS1), comprising:

generating a primary synchronization signal (205) PSS, the PSS associated with a cell identification, ID, of a cell, wherein a symbol of the PSS carries three hypotheses of the cell ID;
generating a secondary synchronization signal (210), SSS, the SSS associated with a cell identity group for the cell, the SSS derived from two sequences, wherein each of the two sequences is selected from a same set of N sequences and indexed by an index pair ($S_1$, $S_2$) with $S_1$ and $S_2$ being within a range of zero to N-1, wherein the index pair $S_1$, $S_2$ is contained in a mapped set of index pairs corresponding to the same set of N sequences and wherein each of the two sequences is used as an even sequence in a first segment of the SSS and as an odd sequence in a second segment of the SSS; and
transmitting the primary and secondary synchronization signals (205, 210).

**2.** The method as recited in Claim 1, wherein for a given frame timing value, index pair conditions $S_2 > S_1$ and $S_2 - S_1$ are restricted throughout possible integer values by a selected usage of all N sequences.

**3.** The method as recited in Claim 2, wherein the indices $S_1$ and $S_2$ represent two different cyclic shifts of the same M-sequence.

**4.** The method as recited in Claim 2, wherein the number of cell identity groups is 168, N is 31, and the index pair condition $S_2 - S_1$ ranges from one to seven.

**5.** The method as recited in Claim 2, wherein index pair conditions ($S_1$, $S_2$) = ($m_1$ , $m_2$) and ($S_1$, $S_2$) = ($m_2$, $m_1$) represent a same cell identity group for two different frame timing values.

**6.** The method as recited in Claim 1, wherein a first and second frame timing value corresponds to an index pair condition of $S_1 > S_2$ and $S_2 > S_1$, respectively.

**7.** The method as recited in Claim 1, wherein a first and second frame timing value corresponds to an index pair condition of $S_2 > S_1$ and $S_1 > S_2$, respectively.

**8.** A transmitter (105, 115) for use with a base station (BS1), comprising:

a primary module (106, 116) configured to generate a primary synchronization signal (205), PSS, the PSS associated with a cell identification, ID, of a cell, wherein a symbol of the PSS carries three hypotheses of the cell ID;
a secondary mapping module (107, 117) configured to generate a secondary synchronization signal (210), SSS, the SSS associated with a cell identity group for the cell, the SSS derived from two sequences, wherein each of the two sequences is selected from a same set of N sequences and indexed by an index pair ($S_1$, $S_2$) with $S_1$ and $S_2$ being within a range of zero to N-1, wherein the index pair ($S_1$, $S_2$) is contained in a mapped set of index pairs corresponding to the same set of N sequences and wherein each of the two sequences is used as an even sequence in a first segment of the SSS and as an odd sequence in a second segment of the SSS; and
a transmit module (108, 118) configured to transmit the primary and secondary synchronization signals (205, 210).

**9.** The transmitter (105, 115) as recited in Claim 8, wherein for a given frame timing value, index pair conditions $S_2 > S_1$ and $S_2 - S_1$ are restricted throughout possible integer values by a selected usage of all N sequences.

**10.** The transmitter (105, 115) as recited in Claim 9, **characterized by** at least one of the following: a) the indices S 1 and S 2 represent two different cyclic shifts of the same M-sequence; b) the number of cell identity groups is 168, N is 31, and the index pair condition $S_2 - S_1$ ranges from one to seven; c) index pair conditions ($S_1$, $S_2$) = ($m_1$, $m_2$) and ($S_1$ , $S_2$) = ($m_2$, $m_1$) represent a same cell identity group for two different frame timing values.

**11.** The transmitter (105, 115) as recited in Claim 8, wherein a first and second frame timing value corresponds to an index pair condition of $S_1 > S_2$ and $S_2 > S_1$, respectively.

**12.** The transmitter (105, 115) as recited in Claim 8, wherein a first and second frame timing value corresponds to an index pair condition of $S_2 > S_1$ and $S_1 > S_2$, respectively.

**13.** A receiver (125) for use with user equipment, comprising:

a receive module (126) configured to receive primary and secondary synchronization signals (205, 210);
a primary processing module (127) configured to detect a partial cell identity of a cell from the primary synchronization signal (205); and
a secondary processing module (128) configured to detect a cell identity group from the secondary synchronization signal (210), SSS, the SSS derived from two sequences, wherein each of the two sequences is selected from a same set of N sequences and indexed by an index pair ($S_1$, $S_2$) with $S_1$ and $S_2$ being within a range of zero to N-1, wherein the index pair ($S_1$, $S_2$) is contained in a mapped set of index pairs corresponding to the same set of N sequences and wherein each of the two sequences is used as an even sequence in a first segment of the SSS and as an odd sequence in a second segment of the SSS.

**14.** A method of operating a receiver (125) for use with user equipment, comprising:

receiving primary and secondary synchronization signals (205, 210);
detecting a partial cell identity from the primary synchronization signal (205); and
defining a cell identity group from the secondary synchronization signal (210), SSS, the SSS derived from two sequences, wherein each of the two sequences is selected from a same set of N sequences and indexed by an index pair ($S_1$, $S_2$) with $S_1$ and $S_2$ being within a range of zero to N-1, wherein the index pair ($S_1$, $S_2$) is contained in a mapped set of index pairs corresponding to the same set of N sequences and wherein each of the two sequences is used as an even sequence in a first segment of the SSS and as an odd sequence in a second segment of the SSS.

**Patentansprüche**

**1.** Verfahren zum Betreiben eines Senders (105, 115) zur Verwendung mit einer Basisstation (BS1), umfassend:

Erzeugen eines primären Synchronisierungssignals (205) PSS, wobei das PSS mit einer Zellenkennung, ID, einer Zelle assoziiert ist, wobei ein Symbol des PSS drei Hypothesen der Zellen-ID trägt;
Erzeugen eines sekundären Synchronisierungssignals (210), SSS, wobei das SSS mit einer Zellenkennungsgruppe für die Zelle assoziiert ist, das SSS von zwei Abfolgen abgeleitet ist, wobei jede der zwei Abfolgen aus einer selben Menge von N Abfolgen ausgewählt und durch ein Indexpaar ($S_1$, $S_2$) indexiert ist, wobei $S_1$ und $S_2$ in einem Bereich von null bis N-1 sind, wobei das Indexpaar $S_1$, $S_2$ in einer zugeordneten Menge von Indexpaaren korrespondierend mit derselben Menge von N Abfolgen enthalten ist und wobei jede der zwei Abfolgen als eine gerade Abfolge in einem ersten Segment des SSS und als eine ungerade Abfolge in einem zweiten Segment des SSS verwendet wird; und
Übertragen der primären und sekundären Synchronisierungssignale (205, 210).

**2.** Verfahren nach Anspruch 1, wobei für einen gegebenen Rahmentaktungswert Indexpaarbedingungen $S_2 > S_1$ und $S_2 - S_1$ durch mögliche ganzzahlige Werte durch eine ausgewählte Nutzung aller N Abfolgen beschränkt sind.

**3.** Verfahren nach Anspruch 2, wobei die Indices $S_1$ und $S_2$ zwei verschiedene zyklische Verschiebungen derselben M-Abfolge repräsentieren.

**4.** Verfahren nach Anspruch 2, wobei die Anzahl von Zellenkennungsgruppen 168 beträgt, N 31 ist und die Indexpaarbedingung $S_2 - S_1$ einen Bereich von eins bis sieben aufweist.

**5.** Verfahren nach Anspruch 2, wobei die Indexpaarbedingungen ($S_1$, $S_2$) = ($m_1$, $m_2$) und ($S_1$, $S_2$) = ($m_2$, $m_1$) eine gleiche Zellenkennungsgruppe für zwei verschiedene Rahmentaktungswerte repräsentieren.

**6.** Verfahren nach Anspruch 1, wobei ein erster und ein zweiter Rahmentaktungswert mit einer Indexpaarbedingung von $S_1 > S_2$ bzw. $S_2 > S_1$ korrespondiert.

**7.** Verfahren nach Anspruch 1, wobei ein erster und ein zweiter Rahmentaktungswert mit einer Indexpaarbedingung von $S_2 > S_1$ bzw. $S_1 > S_2$ korrespondiert.

**8.** Sender (105, 115) zur Verwendung mit einer Basisstation (BS1), umfassend:

ein primäres Modul (106, 116), konfiguriert zum Erzeugen eines primären Synchronisierungssignals (205),

PSS), wobei das PSS mit einer Zellenkennung, ID, einer Zelle assoziiert ist, wobei ein Symbol des PSS drei Hypothesen der Zellen-ID trägt;
ein sekundäres Abbildungsmodul (107, 117), konfiguriert zum Erzeugen eines sekundären Synchronisierungssignals (210), SSS, wobei das SSS mit einer Zellenkennungsgruppe für die Zelle assoziiert ist, das SSS von zwei Abfolgen abgeleitet ist, wobei jede der zwei Abfolgen aus einer selben Menge von N Abfolgen ausgewählt und durch ein Indexpaar ($S_1$, $S_2$) indexiert ist, wobei $S_1$ und $S_2$ in einem Bereich von null bis N-1 sind, wobei das Indexpaar ($S_1$, $S_2$) in einer zugeordneten Menge von Indexpaaren korrespondierend mit derselben Menge von N Abfolgen enthalten ist und wobei jede der zwei Abfolgen als eine gerade Abfolge in einem ersten Segment des SSS und als eine ungerade Abfolge in einem zweiten Segment des SSS verwendet wird; und
ein Übertragungsmodul (108, 118), konfiguriert zum Übertragen der primären und sekundären Synchronisierungssignale (205, 210).

**9.** Sender (105, 115) nach Anspruch 8, wobei für einen gegebenen Rahmentaktungswert Indexpaarbedingungen $S_2 > S_1$ und $S_2 - S_1$ durch mögliche ganzzahlige Werte durch eine ausgewählte Nutzung aller N Abfolgen beschränkt sind.

**10.** Sender (105, 115), nach Anspruch 9, **gekennzeichnet durch** mindestens eines des Folgenden: a) die Indices $S_1$ und $S_2$ repräsentieren zwei verschiedene zyklische Verschiebungen derselben M-Abfolge; b) die Anzahl von Zellenkennungsgruppen beträgt 168, N ist 31 und die Indexpaarbedingung $S_2 - S_1$ weist einen Bereich von eins bis sieben auf; c) die Indexpaarbedingungen ($S_1$, $S_2$) = ($m_1$, $m_2$) und ($S_1$, $S_2$) = ($m_2$, $m_1$) repräsentieren eine gleiche Zellenkennungsgruppe für zwei verschiedene Rahmentaktungswerte.

**11.** Sender (105, 115) nach Anspruch 8, wobei ein erster und ein zweiter Rahmentaktungswert mit einer Indexpaarbedingung von $S_1 > S_2$ bzw. $S_2 > S_1$ korrespondiert.

**12.** Sender (105, 115) nach Anspruch 8, wobei ein erster und ein zweiter Rahmentaktungswert mit einer Indexpaarbedingung von $S_2 > S_1$ bzw. $S_1 > S_2$ korrespondiert.

**13.** Empfänger (125) zur Verwendung mit einer Benutzerausrüstung, umfassend:

ein Empfangsmodul (126), konfiguriert zum Empfangen von primären und sekundären Synchronisierungssignalen (205, 210);
ein primäres Verarbeitungsmodul (127), konfiguriert zum Detektieren einer partiellen Zellenkennung einer Zelle aus dem primären Synchronisierungssignal (205); und
ein sekundäres Verarbeitungsmodul (128), konfiguriert zum Detektieren einer Zellenkennungsgruppe aus dem sekundären Synchronisierungssignal (210), SSS, wobei das SSS von zwei Abfolgen abgeleitet ist, wobei jede der zwei Abfolgen aus einer selben Menge von N Abfolgen ausgewählt und durch ein Indexpaar ($S_1$, $S_2$) indexiert ist, wobei $S_1$ und $S_2$ in einem Bereich von null bis N-1 sind, wobei das Indexpaar ($S_1$, $S_2$) in einer zugeordneten Menge von Indexpaaren korrespondierend mit derselben Menge von N Abfolgen enthalten ist und wobei jede der zwei Abfolgen als eine gerade Abfolge in einem ersten Segment des SSS und als eine ungerade Abfolge in einem zweiten Segment des SSS verwendet wird.

**14.** Verfahren zum Betreiben eines Empfängers (125) zur Verwendung mit einer Benutzerausrüstung, umfassend:

Empfangen primärer und sekundärer Synchronisierungssignale (205, 210);
Detektieren einer partiellen Zellenkennung aus dem primären Synchronisierungssignal (205); und
Definieren einer Zellenkennungsgruppe aus dem sekundären Synchronisierungssignal (210), SSS, wobei das SSS von zwei Abfolgen abgeleitet ist, wobei jede der zwei Abfolgen aus einer selben Menge von N Abfolgen ausgewählt und durch ein Indexpaar ($S_1$, $S_2$) indexiert ist, wobei $S_1$ und $S_2$ in einem Bereich von null bis N-1 sind, wobei das Indexpaar ($S_1$, $S_2$) in einer zugeordneten Menge von Indexpaaren korrespondierend mit derselben Menge von N Abfolgen enthalten ist und wobei jede der zwei Abfolgen als eine gerade Abfolge in einem ersten Segment des SSS und als eine ungerade Abfolge in einem zweiten Segment des SSS verwendet wird.

## Revendications

**1.** Procédé de fonctionnement d’un émetteur (105, 115) destiné à être utilisé avec une station de base (BS1), comprenant les étapes suivantes :

générer un signal de synchronisation primaire (205) PSS, le PSS étant associé à une identification de cellule, ID, d'une cellule, où un symbole du PSS porte trois hypothèses de l'ID de cellule ;
générer un signal de synchronisation secondaire (210), SSS, le SSS étant associé à un groupe d'identité de cellule pour la cellule, le SSS étant dérivé de deux séquences, où chacune des deux séquences est sélectionnée parmi un même ensemble de N séquences et indexée par une paire d'index ($S_1$, $S_2$) avec $S_1$ et $S_2$ se situant dans une plage allant de zéro à N-1, où la paire d'index $S_1$, $S_2$ est contenue dans un ensemble mappé de paires d'index correspondant au même ensemble de N séquences, et où chacune des deux séquences est utilisée comme séquence paire dans un premier segment du SSS et comme séquence impaire dans un second segment du SSS ; et
transmettre les signaux de synchronisation primaire et secondaire (205, 210).

**2.** Procédé tel qu'énoncé dans la revendication 1, dans lequel, pour une valeur de synchronisation de trame donnée, les conditions de paire d'index $S_2 > S_1$ et $S_2 - S_1$ sont limitées dans les valeurs entières possibles par une utilisation sélectionnée de l'ensemble des N séquences.

**3.** Procédé tel qu'énoncé dans la revendication 2, dans lequel les index $S_1$ et $S_2$ représentent deux décalages cycliques différents de la même séquence M.

**4.** Procédé tel qu'énoncé dans la revendication 2, dans lequel le nombre de groupes d'identité de cellule est 168, N est égal à 31, et la condition de paire d'index $S_2 - S_1$ est comprise entre un et sept.

**5.** Procédé tel qu'énoncé dans la revendication 2, dans lequel les conditions de paire d'index ($S_1$, $S_2$) = ($m_1$, $m_2$) et ($S_1$, $S_2$) = ($m_2$, $m_1$) représentent un même groupe d'identité de cellule pour deux valeurs de synchronisation de trame différentes.

**6.** Procédé tel qu'énoncé dans la revendication 1, dans lequel une première valeur de synchronisation de trame et une seconde valeur de synchronisation de trame correspondent à une condition de paire d'index $S_1 > S_2$ et $S_2 > S_1$, respectivement.

**7.** Procédé tel qu'énoncé dans la revendication 1, dans lequel une première valeur de synchronisation de trame et une seconde valeur de synchronisation de trame correspondent à une condition de paire d'index $S_2 > S_1$ et $S_1 > S_2$, respectivement.

**8.** Émetteur (105, 115) destiné à être utilisé avec une station de base ($BS_1$), comprenant :

un module primaire (106, 116) configuré pour générer un signal de synchronisation primaire (205), PSS, le PSS étant associé à une identification de cellule, ID, d'une cellule, où un symbole du PSS porte trois hypothèses de l'ID de cellule ;
un module de mappage secondaire (107, 117) configuré pour générer un signal de synchronisation secondaire (210), SSS, le SSS étant associé à un groupe d'identité de cellule pour la cellule, le SSS étant dérivé de deux séquences, où chacune des deux séquences est sélectionnée parmi un même ensemble de N séquences et indexée par une paire d'index ($S_1$, $S_2$) avec $S_1$ et $S_2$ se situant dans une plage allant de zéro à N-1, où la paire d'index ($S_1$, $S_2$) est contenue dans un ensemble mappé de paires d'index correspondant au même ensemble de N séquences, et où chacune des deux séquences est utilisée comme séquence paire dans un premier segment du SSS et comme séquence impaire dans un second segment du SSS ; et
un module de transmission (108, 118) configuré pour transmettre les signaux de synchronisation primaire et secondaire (205, 210).

**9.** Émetteur (105, 115) tel qu'énoncé dans la revendication 8, dans lequel, pour une valeur de synchronisation de trame donnée, les conditions de paire d'index $S_2 > S_1$ et $S_2 - S_1$ sont limitées dans les valeurs entières possibles par une utilisation sélectionnée de l'ensemble des N séquences.

**10.** Émetteur (105, 115) tel qu'énoncé dans la revendication 9, **caractérisé par** au moins l'un des éléments suivants : a) les index $S_1$ et $S_2$ représentent deux décalages cycliques différents de la même séquence M ; b) le nombre de groupes d'identité de cellule est 168, N est égal à 31, et la condition de paire d'index $S_2 - S_1$ est comprise entre un et sept ; c) les conditions de paire d'index ($S_1$, $S_2$) = ($m_1$, $m_2$) et ($S_1$, $S_2$) = ($m_2$, $m_1$) représentent un même groupe d'identité de cellule pour deux valeurs de synchronisation de trame différentes.

**11.** Émetteur (105, 115) tel qu'énoncé dans la revendication 8, dans lequel une première valeur de synchronisation de trame et une seconde valeur de synchronisation de trame correspondent à une condition de paire d'index $S_1 > S_2$ et $S_2 > S_1$, respectivement.

**12.** Émetteur (105, 115) tel qu'énoncé dans la revendication 8, dans lequel une première valeur de synchronisation de trame et une seconde valeur de synchronisation de trame correspondent à une condition de paire d'index $S_2 > S_1$ et $S_1 > S_2$, respectivement.

**13.** Récepteur (125) destiné à être utilisé avec un équipement utilisateur, comprenant :

un module de réception (126) configuré pour recevoir des signaux de synchronisation primaire et secondaire (205, 210) ;
un module de traitement primaire (127) configuré pour détecter une identité de cellule partielle d'une cellule à partir du signal de synchronisation primaire (205) ; et
un module de traitement secondaire (128) configuré pour détecter un groupe d'identité de cellule à partir du signal de synchronisation secondaire (210), SSS, le SSS étant dérivé de deux séquences, où chacune des deux séquences est sélectionnée parmi un même ensemble de N séquences et indexée par une paire d'index ($S_1$, $S_2$) où $S_1$ et $S_2$ se situant dans une plage allant de zéro à N-1, où la paire d'index ($S_1$, $S_2$) est contenue dans un ensemble mappé de paires d'index correspondant au même ensemble de N séquences, et où chacune des deux séquences est utilisée comme séquence paire dans un premier segment du SSS et comme séquence impaire dans un second segment du SSS.

**14.** Procédé de fonctionnement d'un récepteur (125) destiné à être utilisé avec un équipement utilisateur, comprenant les étapes suivantes :

recevoir des signaux de synchronisation primaire et secondaire (205, 210) ;
détecter une identité de cellule partielle à partir du signal de synchronisation primaire (205) ; et
définir un groupe d'identité de cellule à partir du signal de synchronisation secondaire (210), SSS, le SSS étant dérivé de deux séquences, où chacune des deux séquences est sélectionnée parmi un même ensemble de N séquences et indexée par une paire d'index ($S_1$, $S_2$), $S_1$ et $S_2$ se situant dans une plage allant de zéro à N-1, où la paire d'index ($S_1$, $S_2$) est contenue dans un ensemble mappé de paires d'index correspondant au même ensemble de N séquences, et où chacune des deux séquences est utilisée comme séquence paire dans un premier segment du SSS et comme séquence impaire dans un second segment du SSS.

FIG. 1

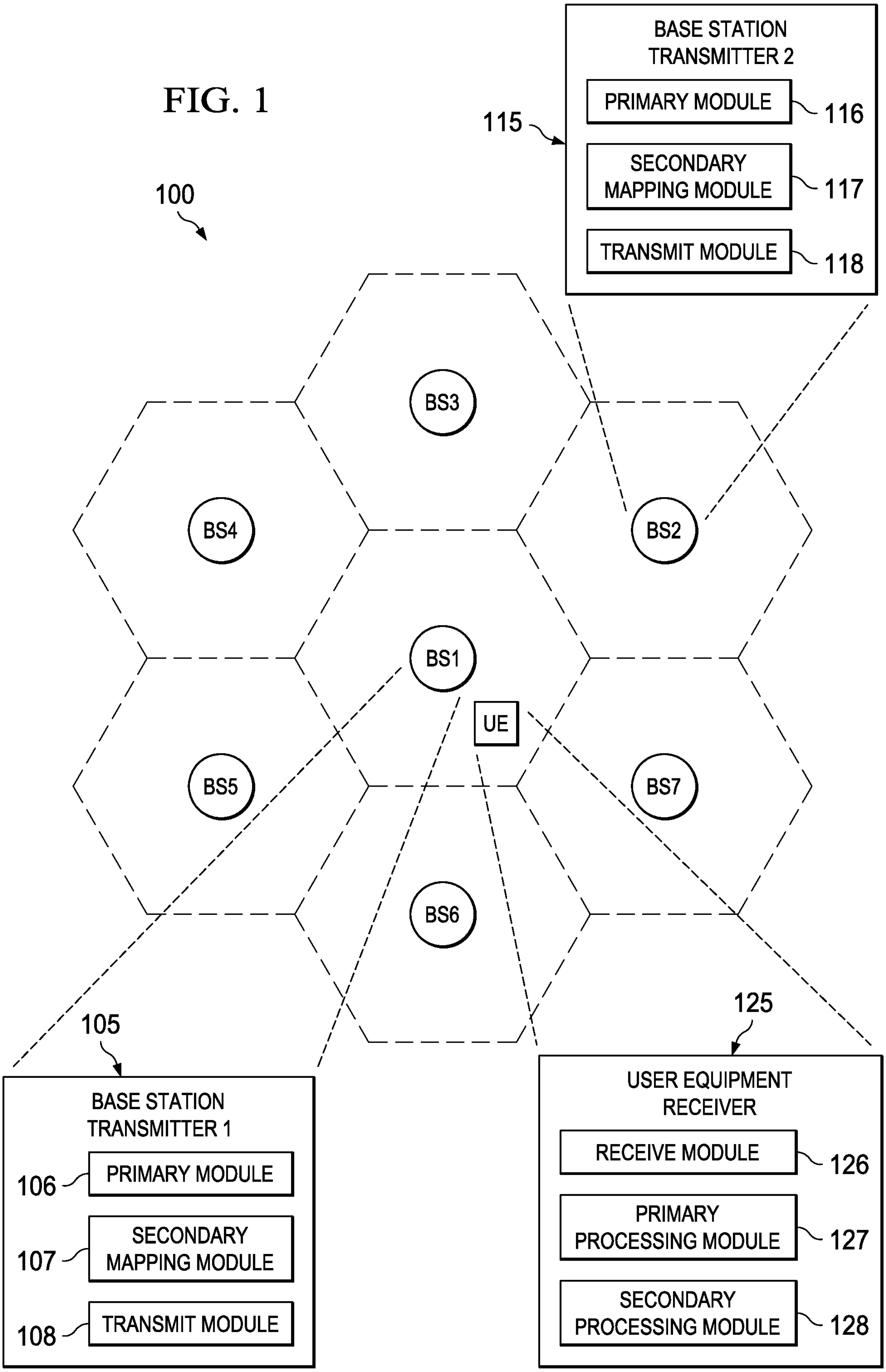
BASE STATION TRANSMITTER 2
PRIMARY MODULE
116
SECONDARY MAPPING MODULE
117
TRANSMIT MODULE
118
115
100
BS3
BS4
BS2
BS1
UE
BS5
BS7
BS6
105
BASE STATION TRANSMITTER 1
106
PRIMARY MODULE
107
SECONDARY MAPPING MODULE
108
TRANSMIT MODULE
125
USER EQUIPMENT RECEIVER
RECEIVE MODULE
126
PRIMARY PROCESSING MODULE
127
SECONDARY PROCESSING MODULE
128

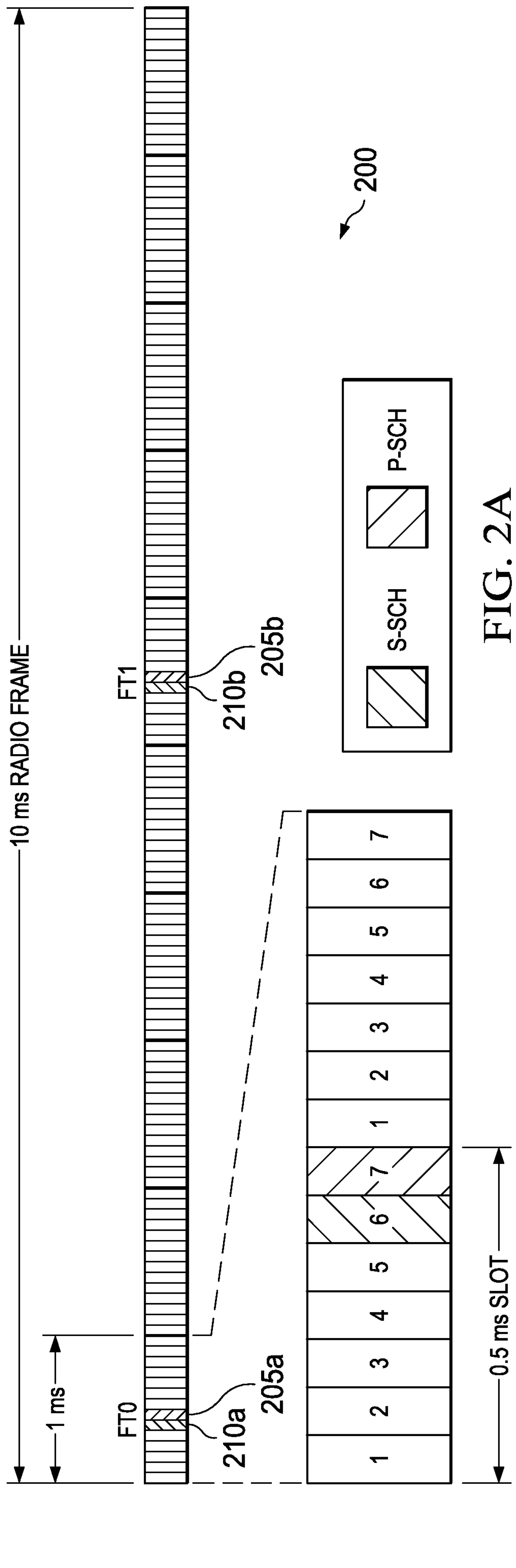
200
10 ms RADIO FRAME
1 ms
FT0
FT1
205a
210a
205b
210b
1
2
3
4
5
6
7
1
2
3
4
5
6
7
0.5 ms SLOT
S-SCH
P-SCH

FIG. 2A

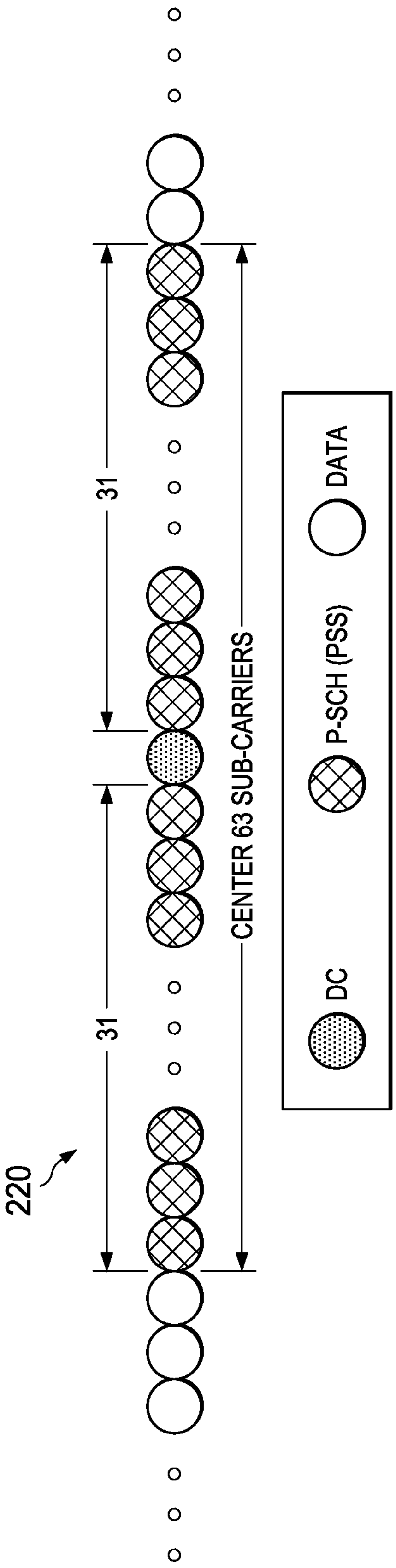
220
31
31
CENTER 63 SUB-CARRIERS
DC
P-SCH (PSS)
DATA

FIG. 2B

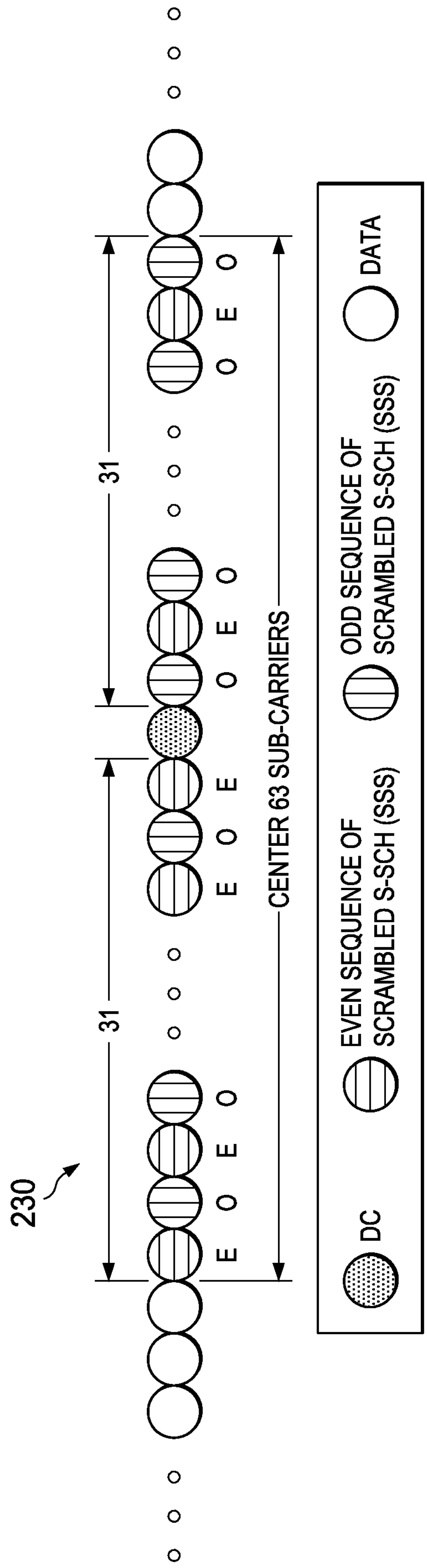
230
31
31
E O E O
E O E
O E O
O E O
CENTER 63 SUB-CARRIERS
DC
EVEN SEQUENCE OF SCRAMBLED S-SCH (SSS)
ODD SEQUENCE OF SCRAMBLED S-SCH (SSS)
DATA

FIG. 2C

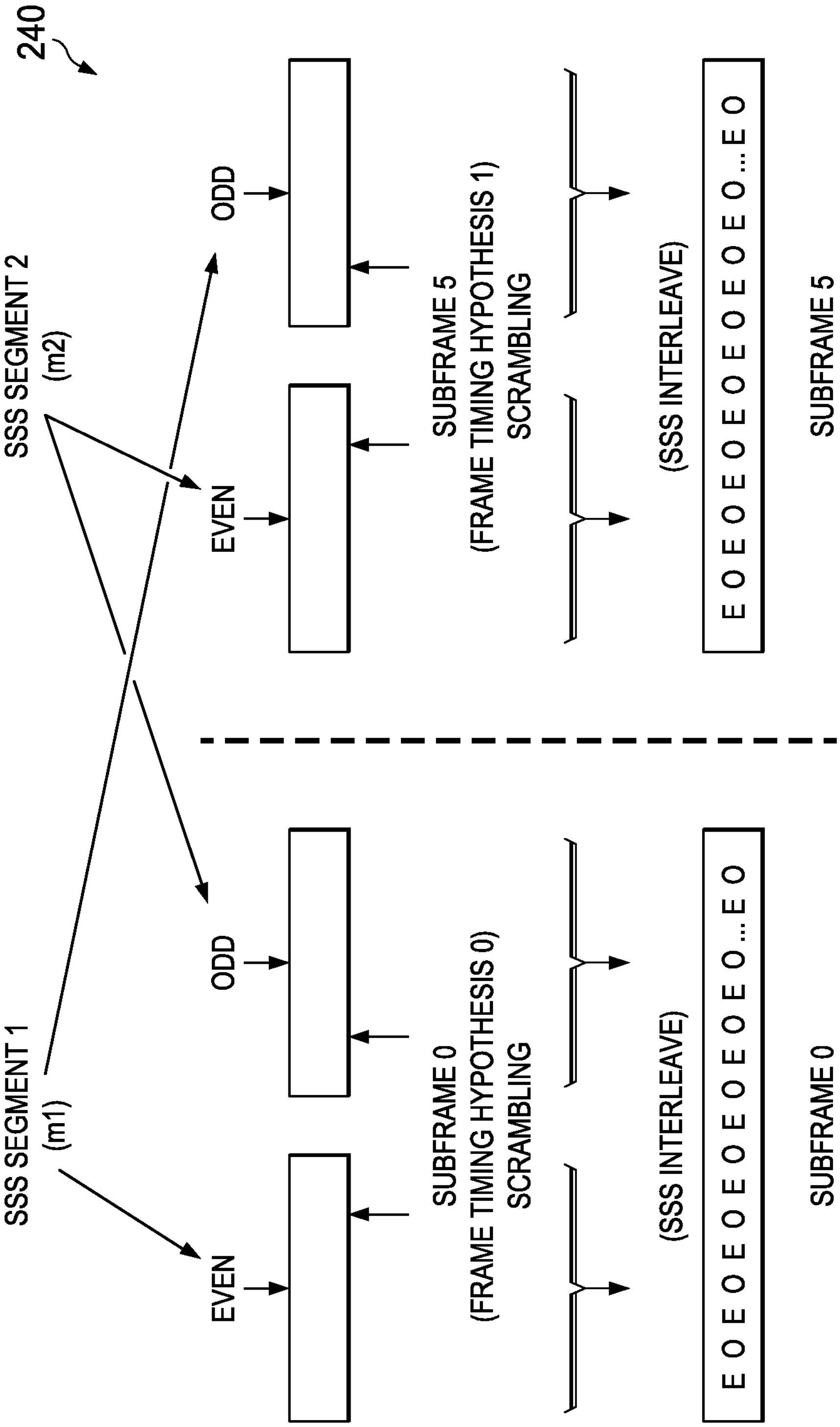
240
SSS SEGMENT 1
(m1)
SSS SEGMENT 2
(m2)
EVEN
ODD
EVEN
ODD
SUBFRAME 0
(FRAME TIMING HYPOTHESIS 0)
SCRAMBLING
SUBFRAME 5
(FRAME TIMING HYPOTHESIS 1)
SCRAMBLING
(SSS INTERLEAVE)
E O E O E O E O E O E O E O E O ... E O
(SSS INTERLEAVE)
E O E O E O E O E O E O E O E O ... E O
SUBFRAME 0
SUBFRAME 5

FIG. 2D

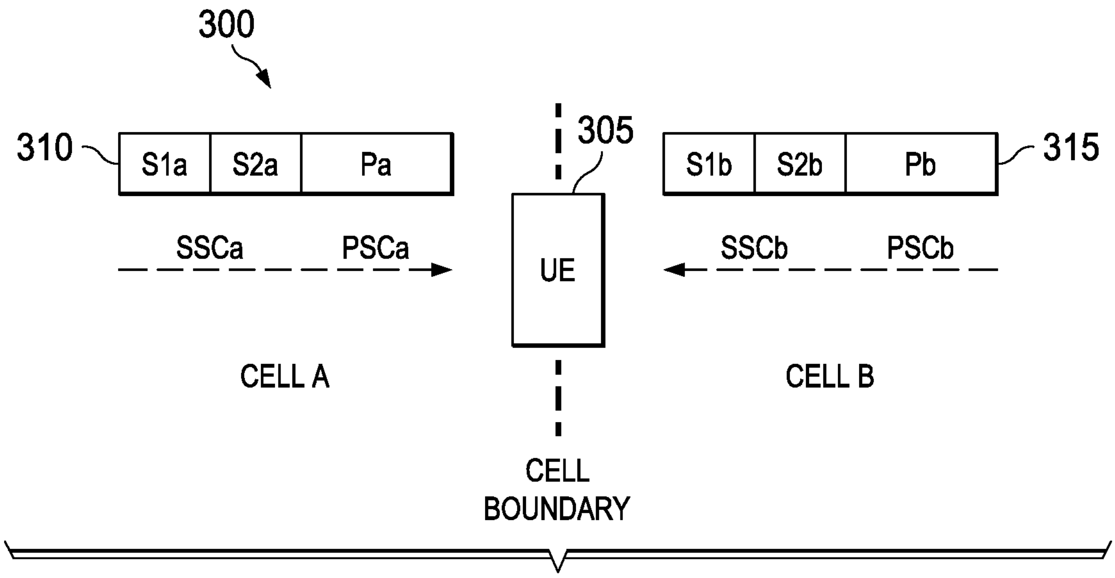
300
310
S1a
S2a
Pa
305
S1b
S2b
Pb
315
SSCa
PSCa
UE
SSCb
PSCb
CELL A
CELL B
CELL
BOUNDARY

FIG. 3

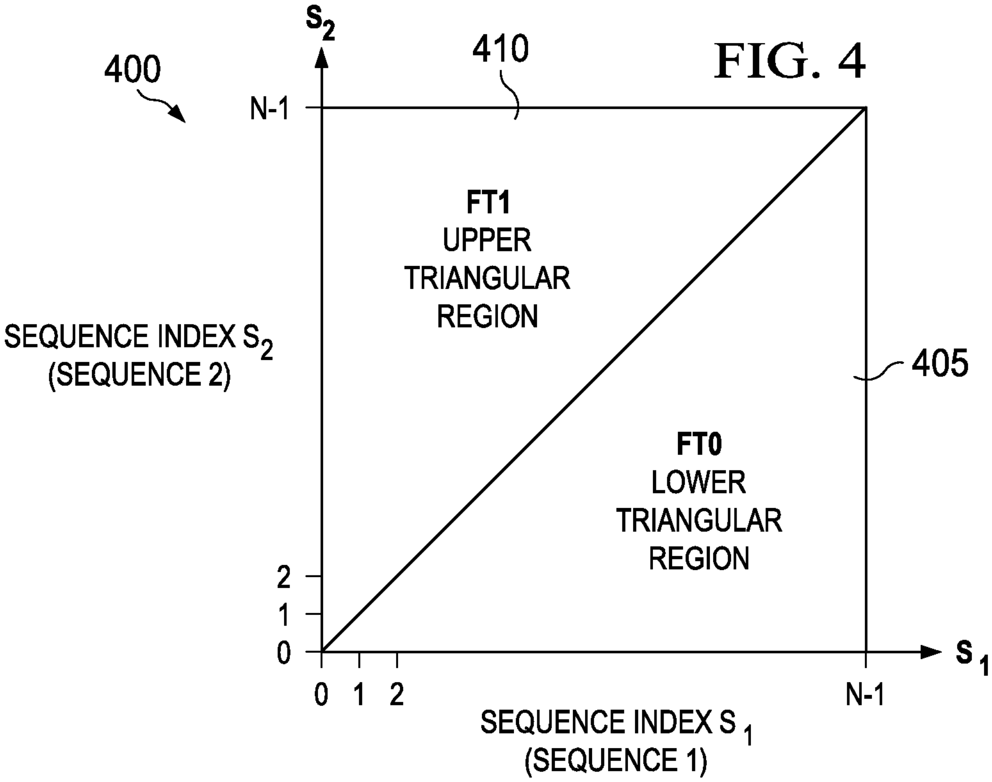
S2
400
410
N-1
FT1
UPPER
TRIANGULAR
REGION
SEQUENCE INDEX S2
(SEQUENCE 2)
405
FT0
LOWER
TRIANGULAR
REGION
2
1
0
0 1 2
N-1
S 1
SEQUENCE INDEX S 1
(SEQUENCE 1)

FIG. 4

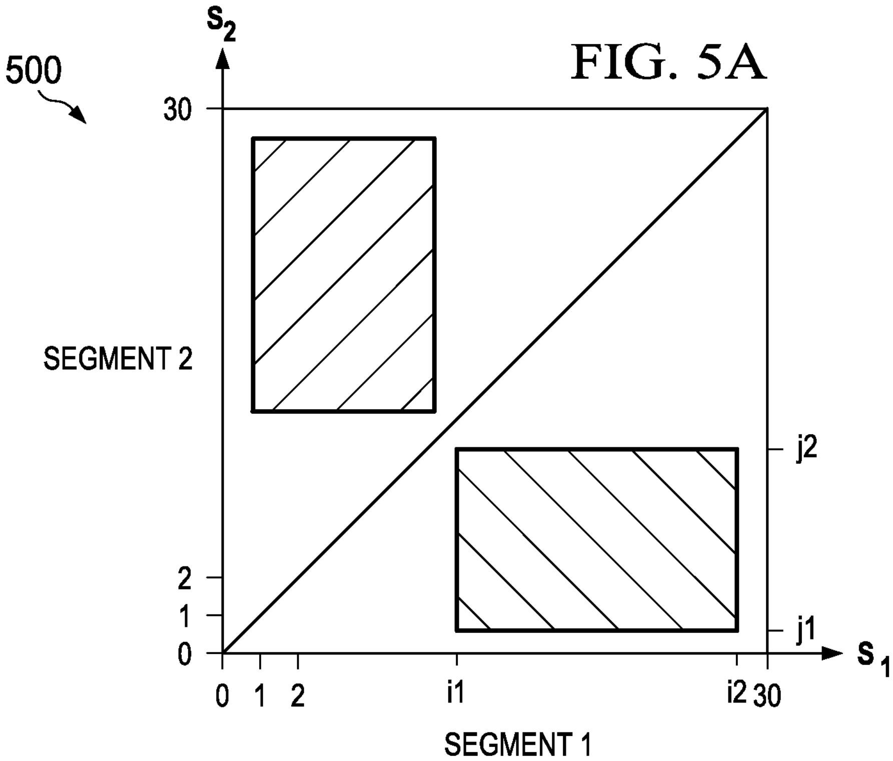
500
s2
30
SEGMENT 2
2
1
0
0
1
2
i1
i2
30
SEGMENT 1
j2
j1
s1

FIG. 5A

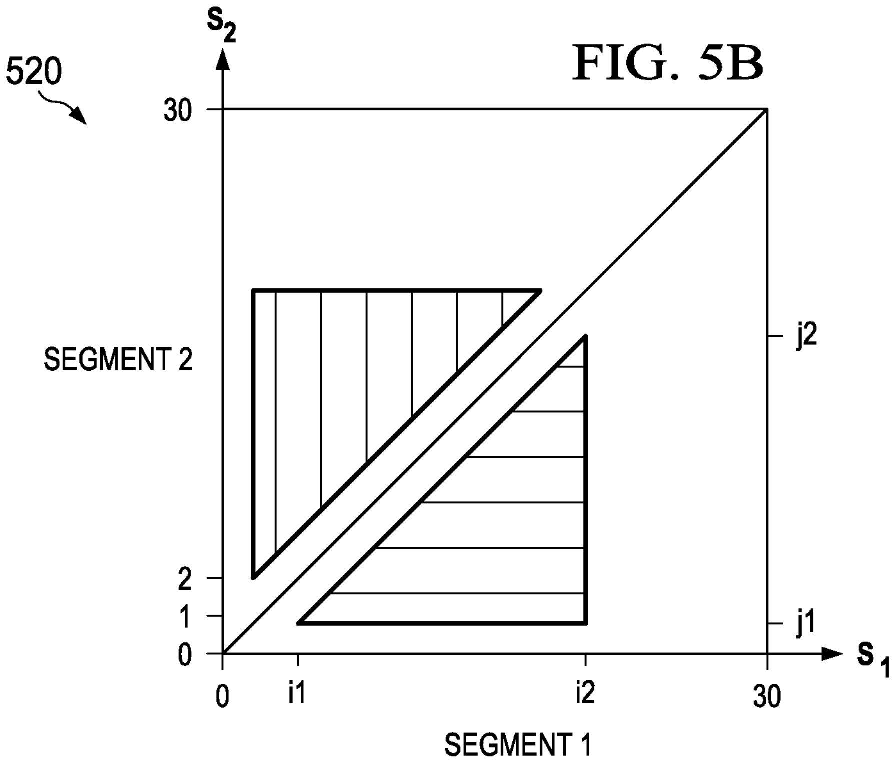
520
s2
30
SEGMENT 2
2
1
0
0
i1
i2
30
SEGMENT 1
j2
j1
s1

FIG. 5B

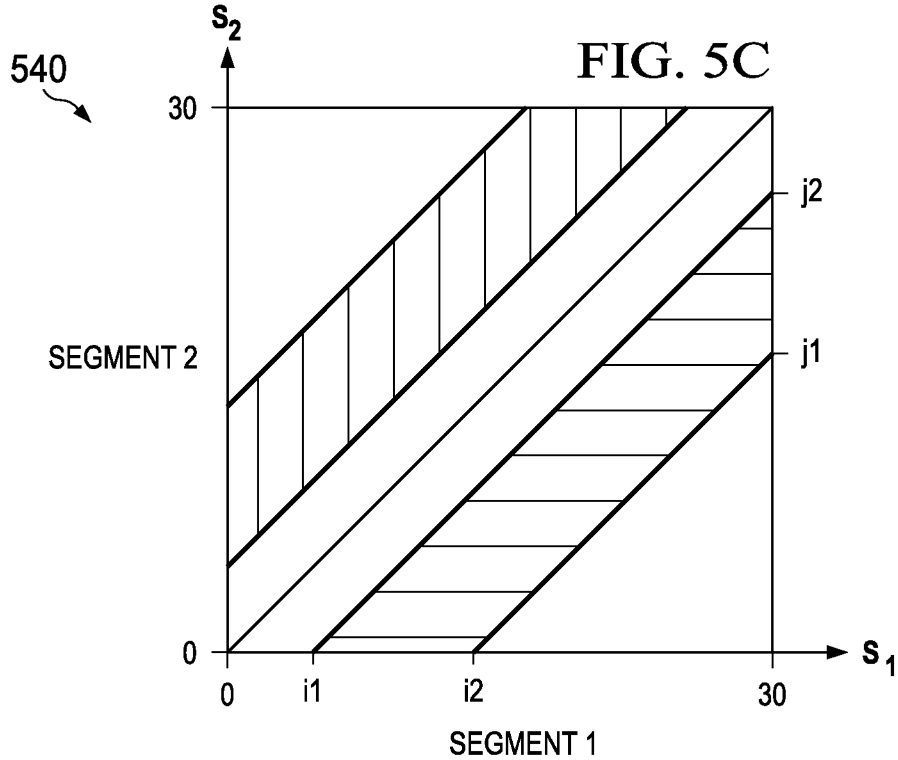
540
$S_2$
30
SEGMENT 2
0
0
i1
i2
30
$S_1$
j2
j1
SEGMENT 1

FIG. 5C

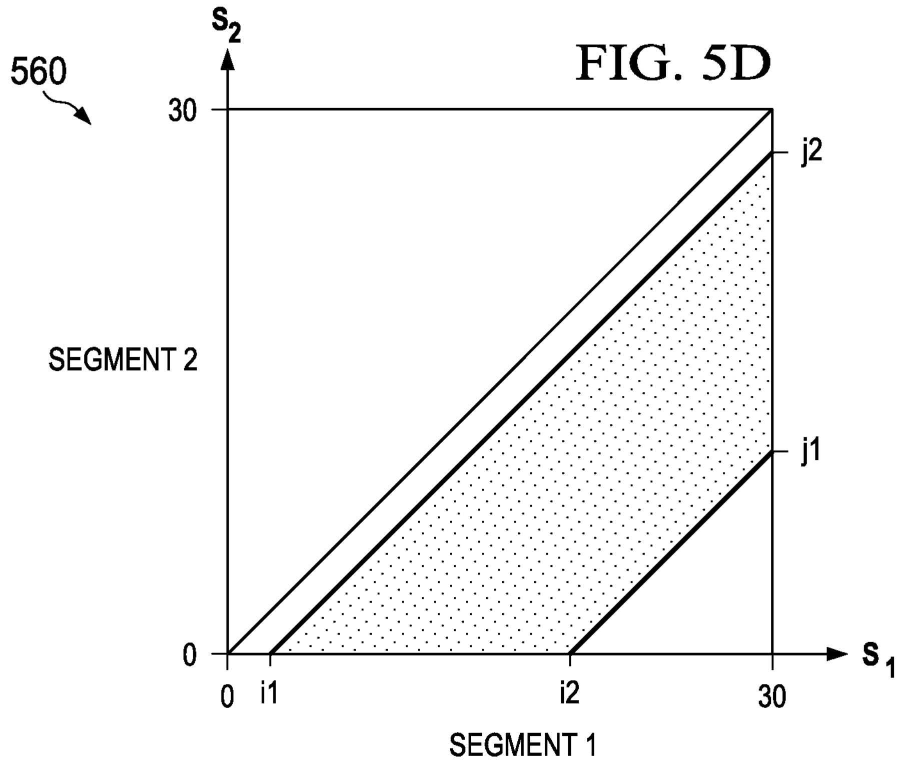
560
$S_2$
30
SEGMENT 2
0
0
i1
i2
30
$S_1$
j2
j1
SEGMENT 1

FIG. 5D

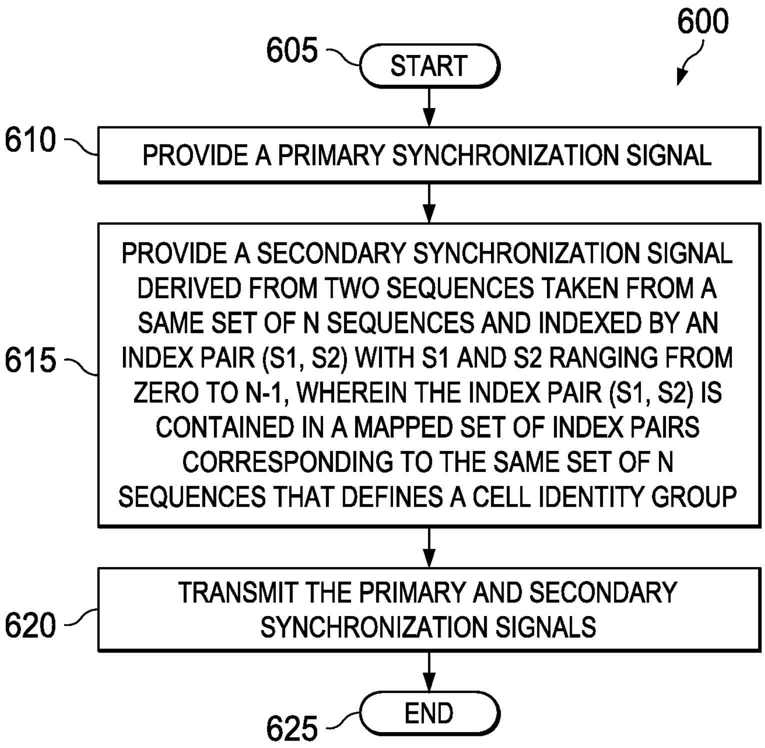
600
605
START
610
PROVIDE A PRIMARY SYNCHRONIZATION SIGNAL
615
PROVIDE A SECONDARY SYNCHRONIZATION SIGNAL DERIVED FROM TWO SEQUENCES TAKEN FROM A SAME SET OF N SEQUENCES AND INDEXED BY AN INDEX PAIR (S1, S2) WITH S1 AND S2 RANGING FROM ZERO TO N-1, WHEREIN THE INDEX PAIR (S1, S2) IS CONTAINED IN A MAPPED SET OF INDEX PAIRS CORRESPONDING TO THE SAME SET OF N SEQUENCES THAT DEFINES A CELL IDENTITY GROUP
620
TRANSMIT THE PRIMARY AND SECONDARY SYNCHRONIZATION SIGNALS
625
END

FIG. 6

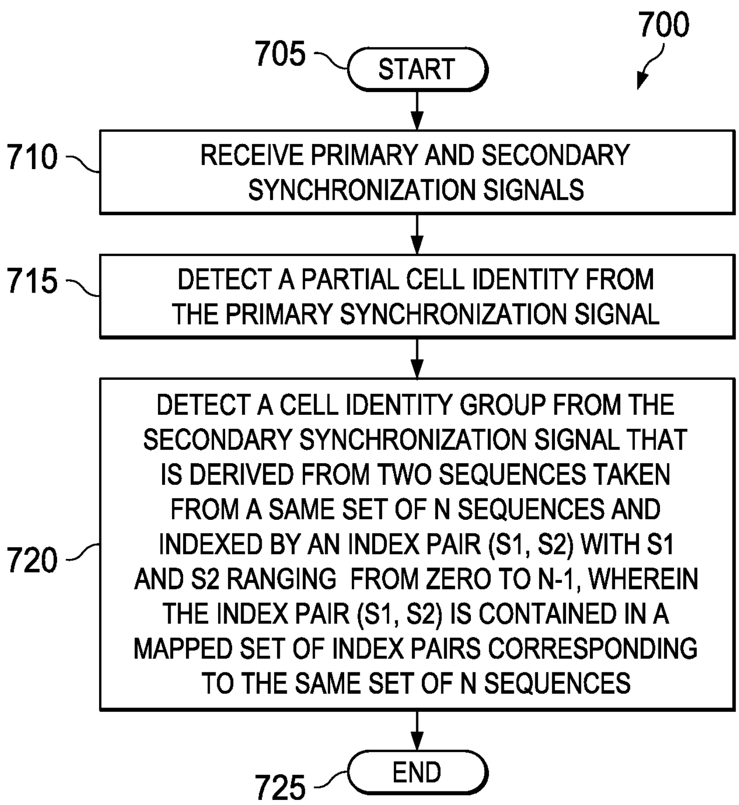
700
705
START
710
RECEIVE PRIMARY AND SECONDARY SYNCHRONIZATION SIGNALS
715
DETECT A PARTIAL CELL IDENTITY FROM THE PRIMARY SYNCHRONIZATION SIGNAL
720
DETECT A CELL IDENTITY GROUP FROM THE SECONDARY SYNCHRONIZATION SIGNAL THAT IS DERIVED FROM TWO SEQUENCES TAKEN FROM A SAME SET OF N SEQUENCES AND INDEXED BY AN INDEX PAIR (S1, S2) WITH S1 AND S2 RANGING FROM ZERO TO N-1, WHEREIN THE INDEX PAIR (S1, S2) IS CONTAINED IN A MAPPED SET OF INDEX PAIRS CORRESPONDING TO THE SAME SET OF N SEQUENCES
725
END

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040246998 A